(19) Europäisches Patentamt
European Patent Office
Office européen des brevets

(11) **EP 3 389 076 B1**

(12) **FASCICULE DE BREVET EUROPEEN**

(45) Date de publication et mention de la délivrance du brevet:
**04.09.2019 Bulletin 2019/36**

(51) Int Cl.:
***H01H 83/22*** *(2006.01)*    ***H02H 1/06*** *(2006.01)*
***H02H 3/33*** *(2006.01)*

(21) Numéro de dépôt: **18166142.2**

(22) Date de dépôt: **06.04.2018**

(54) **PROCÉDÉ ET DISPOSITIF DE COMMANDE D'UN ACTIONNEUR, ET APPAREIL DE PROTECTION ÉLECTRIQUE COMPORTANT UN TEL DISPOSITIF**

**STEUERVERFAHREN UND -VORRICHTUNG EINES STELLGLIEDS, UND ELEKTRISCHES SCHUTZGERÄT, DAS EINE SOLCHE VORRICHTUNG UMFASST**

**METHOD AND DEVICE FOR CONTROLLING AN ACTUATOR, AND ELECTRICAL PROTECTION UNIT COMPRISING SUCH A DEVICE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.04.2017 FR 1753154**

(43) Date de publication de la demande:
**17.10.2018 Bulletin 2018/42**

(73) Titulaire: **Schneider Electric Industries SAS 92500 Rueil Malmaison (FR)**

(72) Inventeur: **BERNARD, Jean-Baptiste 38050 Grenoble Cedex 09 (FR)**

(74) Mandataire: **Tripodi, Paul Schneider Electric Industries SAS Service Propriété Industrielle World Trade Center / 38EE1 5 Place Robert Schuman 38050 Grenoble Cedex 09 (FR)**

(56) Documents cités:
**EP-A2- 2 211 437        WO-A1-86/06222
WO-A1-2007/121492        WO-A1-2015/082629
WO-A2-2006/007608        AT-B- 387 675**

**Description**

**DOMAINE TECHNIQUE**

La présente invention concerne un procédé de commande d'un actionneur destiné à activer l'ouverture d'un interrupteur de courant. L'invention concerne aussi un dispositif de commande d'un actionneur mettant en oeuvre ledit procédé de commande. L'invention concerne également un appareil de protection électrique comportant un tel dispositif de commande d'un actionneur.

**ETAT DE LA TECHNIQUE**

Les appareils de protection électrique sont largement utilisés sur les réseaux électriques afin de protéger les biens et les personnes contre des défauts électriques. Ces appareils de protection ont pour fonction, entre autre, d'interrompre l'alimentation électrique d'une portion défaillante du circuit électrique dès qu'un défaut est détecté afin d'isoler la portion défaillante du reste du circuit électrique. Pour cela, les appareils de protection comportent un circuit de détection qui détecte un défaut tel qu'un court-circuit, une surcharge, un défaut d'isolement à la terre ou encore un défaut d'arc, et un circuit de commande pour commander l'ouverture d'un interrupteur de courant au moyen d'un actionneur. Cette commande d'ouverture doit être effectuée le plus rapidement possible dès que le défaut est détecté afin d'en limiter les conséquences.

D'autre part, il existe des contraintes à prendre en compte pour exécuter la commande d'ouverture dans toutes les conditions de fonctionnement. En présence d'un court-circuit sur le réseau électrique, la tension peut baisser dans des proportions importantes selon la longueur et la section des conducteurs de courant soumis au court-circuit. D'autre part, certains appareils de protection électrique, par exemple ceux soumis à la norme EN 61009, ayant une tension nominale d'alimentation de 240 Volt, doivent pouvoir fonctionner jusqu'à une tension d'alimentation de 50 Volt entre phases. Enfin, les circuits doivent fonctionner dans un environnement ou la densité d'appareils est importante et la température de fonctionnement peut être supérieure de quelques dizaines de degrés par rapport à la température ambiante, en particulier quand les équipements électriques sont regroupés proches les uns des autres dans des tableaux ou armoires électriques. Pour bénéficier d'une quantité d'énergie suffisante sans utiliser de moyen de stockage d'énergie onéreux ou encombrant, il est avantageux d'utiliser un actionneur pouvant être alimenté directement par le réseau électrique. Pour cela, un circuit de commande de l'actionneur simple et peu onéreux tel qu'un relais ou un semi-conducteur peut être utilisé. En revanche un actionneur alimenté directement par le réseau électrique est plus ou moins sensible à la baisse de la tension du réseau électrique. Quand la tension d'alimentation d'un actionneur diminue, son fonctionnement peut être ralenti et même être bloqué si la tension est trop basse. Dans ces conditions, il ne peut plus actionner l'ouverture de l'interrupteur de courant et le défaut persiste dans l'installation électrique. Une solution pour résoudre ce problème technique consiste à alimenter l'actionneur tant que la tension d'alimentation est présente. Cette solution a l'inconvénient de causer un échauffement de l'actionneur quand la commande se prolonge et ne résout pas le problème des appareils pouvant être alimentés par l'aval c'est-à-dire du côté de la charge. Dans ce cas, la tension réseau est toujours présente et l'actionneur reste constamment alimenté. L'utilisation d'une alimentation à découpage réduirait le problème de l'échauffement mais induit un surcoût significatif au coût de la fonction. D'autre part, le temps de démarrage d'une alimentation à découpage n'est pas compatible avec le temps de réponse demandé en présence d'un défaut électrique. On connait des solutions pour favoriser l'activation d'un interrupteur dans de bonnes conditions.

Le document WO2015/082629 décrit un appareil de protection électrique, qui comprend une mesure de tension de la ligne électrique et une réserve de puissance pour alimenter le déclencheur pour une certaine période après que la tension de la ligne électrique tombe en dessous de la tension opérationnelle.

Le document EP 2 200 050 A1 décrit un dispositif de commande d'un actionneur par une trame d'ondes de tension. Ce dispositif est particulièrement adapté à la commande d'un contacteur devant effectuer plusieurs millions de manoeuvres sans défaillance, en ayant à vaincre un effort résistant variable, dans une large plage de températures de fonctionnement et pour une tension d'alimentation pouvant varier de plus ou moins 15% par rapport à la tension nominale. La trame d'ondes de tension a préférentiellement une durée égale ou supérieure à 50 ms. Ce type de commande est bien adapté pour effectuer une commande douce de fermeture des contacts du contacteur afin de limiter les contraintes mécaniques et ainsi permettre un grand nombre de manoeuvres de l'appareil.

On connait aussi des solutions pour déconnecter l'actionneur après ouverture du circuit afin d'éviter un échauffement excessif de l'actionneur : le document FR 2 604 295 A1 décrit un dispositif de protection avec deux contacts pour assurer une mise hors tension d'un bouton test, indépendamment du mode d'alimentation par l'amont ou par l'aval. Pour résoudre le même problème technique d'échauffement, on connait le document JP 4 949 927 B2 décrivant une commande d'actionneur pendant deux alternances afin de ne pas provoquer un échauffement excessif en cas d'appui prolongé sur le bouton test ou en cas d'alimentation par l'aval. Cependant les solutions décrites ne mentionnent pas de réponse à la contrainte d'un fonctionnement satisfaisant quand la tension d'alimentation fluctue fortement.

Le but de l'invention est de fournir un procédé permettant de commander le plus rapidement possible un actionneur alimenté par un réseau électrique dont la tension peut baisser dans des proportions très importantes en limitant l'échauffement de l'actionneur. De plus, le procédé de l'invention autorise une alimentation par l'amont ou par l'aval du dispositif de protection dans lequel est mis en oeuvre le procédé.

**EXPOSE DE L'INVENTION**

Pour cela, l'invention décrit, un procédé de commande d'un actionneur destiné à activer l'ouverture d'un interrupteur de courant connecté à une ligne électrique comportant :

- une mesure de tension de la ligne électrique,
- une détermination d'une durée de commande de l'actionneur en fonction de la tension mesurée et d'une durée de commande nominale prédéfinie, la durée de commande étant supérieure à la durée de commande nominale quand la tension mesurée est inférieure à une tension nominale prédéfinie, et
- une commande de l'actionneur pendant la durée de commande déterminée.

Dans un mode de réalisation particulier, si la tension mesurée est supérieure à une tension minimale prédéfinie et inférieure ou égale à la tension nominale prédéfinie, la détermination de la durée de commande de l'actionneur comporte un calcul selon l'équation :

$$durée\ de\ commande\ =\ durée\ de\ commande\ nominale \times \frac{tension\ nominale}{tension\ mesurée}$$

Dans un mode de réalisation préférentiel, la détermination de la durée de commande de l'actionneur utilise une table d'association tension-durée prédéfinie formée de, au moins, deux plages consécutives de tension parmi lesquelles une plage, dite nominale, contient la tension nominale, chaque plage de tension étant associée à une durée prédéfinie de commande, ladite détermination de la durée de commande comportant :

- une ou plusieurs étapes de sélection d'une plage de tension dans laquelle est comprise la tension mesurée, et
- une ou plusieurs étapes de détermination de la durée de commande de l'actionneur égale à la durée prédéfinie de commande associée à la plage de tension sélectionnée.

De préférence, la ligne électrique fournit une tension alternative et la durée de commande de l'actionneur correspond à un nombre entier d'alternances de la tension alternative.
L'invention porte également sur un dispositif d'actionnement comprenant :

- un circuit de mesure relié à une ligne électrique pour fournir une mesure d'une tension de la ligne électrique,
- un circuit de commande d'un actionneur agencé pour commander une alimentation de l'actionneur par le réseau électrique,
- un circuit de traitement relié au circuit de mesure, à un circuit de détection de défaut et au circuit de commande de l'actionneur, ledit circuit de traitement étant agencé pour :
- recevoir un signal de défaut émis par le circuit de détection de défaut,
- recevoir la mesure de la tension de la ligne électrique, et
- exécuter le procédé de commande de l'actionneur décrit précédemment quand ledit circuit de traitement reçoit le signal de défaut.

Avantageusement, la durée de commande de l'actionneur est inférieure ou égale à 40 ms quand la tension de la ligne électrique est égale à une valeur de tension nominale prédéfinie.
Avantageusement, la durée de commande de l'actionneur est limitée à une durée maximale prédéfinie.
Avantageusement, le circuit de commande de l'actionneur fournit une tension alternative redressée à l'actionneur.
Avantageusement, la commande de l'actionneur est initialisée à un passage à zéro de la tension de la ligne électrique.
De préférence, le circuit de commande de l'actionneur comprend un thyristor. Préférentiellement, pour une tension nominale de la ligne électrique égale à 240 Volt, la commande de l'actionneur commande l'alimentation de l'actionneur pendant :

- deux alternances quand la tension mesurée est supérieure ou égale à 150 Volt,
- trois alternances quand la tension mesurée est inférieure à 150 Volt et supérieure ou égale à 100 Volt, et
- quatre alternances quand la tension mesurée est inférieure à 100 Volt.

L'invention porte également sur un appareil de protection électrique connecté à un réseau électrique comportant :

- un interrupteur de courant pour établir ou pour interrompre la circulation d'un courant électrique dans une ligne électrique,
- un actionneur pour activer l'ouverture de l'interrupteur de courant, et
- un circuit de détection de défaut sur le réseau électrique pour fournir un signal de défaut,

ledit appareil de protection électrique comportant un dispositif d'actionnement tel que décrit précédemment.

**BREVE DESCRIPTION DES DESSINS**

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :

- la figure 1 illustre, sous forme de schéma bloc, un appareil de protection électrique comportant un interrupteur de courant, un actionneur et des circuits pour la mise en oeuvre du procédé de l'invention,
- la figure 2 représente un organigramme du procédé de commande de l'actionneur selon un premier mode de réalisation,
- la figure 3A est une représentation graphique d'une durée de commande d'un actionneur calculée au moyen d'une équation, selon un premier mode de détermination,
- la figure 3B est une représentation graphique d'une durée de commande d'un actionneur déterminée au moyen d'une table d'association tension-durée, selon un mode de réalisation préférentiel,
- la figure 4 représente une table d'association tension-durée utilisée dans une étape de détermination d'une durée de commande d'un actionneur selon un mode de réalisation préférentiel,
- la figure 5 représente un organigramme détaillé d'une détermination de la durée de commande de l'actionneur au moyen d'une table d'association tension-durée,
- la figure 6 représente un organigramme du procédé de commande de l'actionneur selon un deuxième mode de réalisation permettant de réduire le temps de réponse lors de la commande de l'actionneur,
- la figure 7A représente un schéma d'un circuit de commande de l'actionneur selon un mode de réalisation préférentiel,
- la figure 7B représente un schéma d'une variante de circuit de commande de l'actionneur,

**DESCRIPTION DETAILLEE DE MODES DE REALISATION PREFERES**

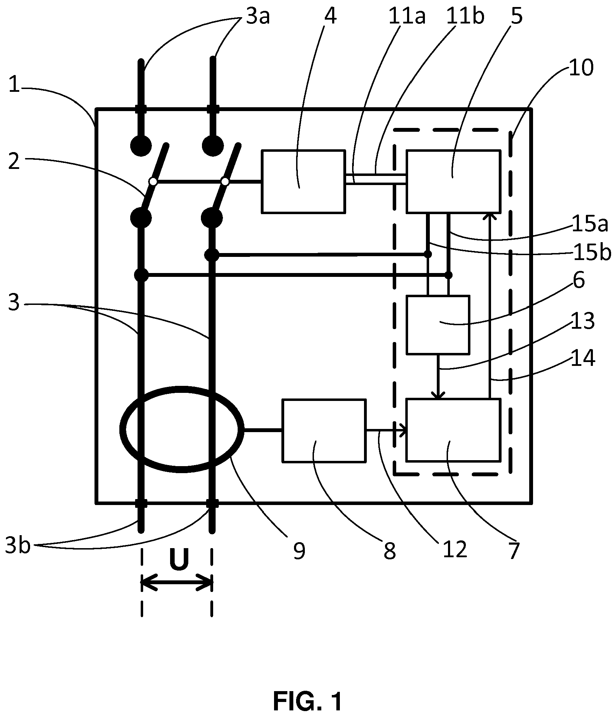

L'invention a pour objet un procédé de commande d'un actionneur 4 pour activer l'ouverture d'un interrupteur de courant 2 dans un appareil de protection 1 pour un réseau électrique. Ainsi que représenté en figure 1 sous la forme d'un schéma bloc, l'appareil de protection 1 est relié au réseau électrique fournisseur d'énergie au moyen de conducteurs 3a et relié à des charges utilisant l'énergie électrique au moyen de conducteurs 3b. A l'intérieur de l'appareil de protection, les conducteurs amont 3a sont reliés en série avec l'interrupteur de courant 2, lui-même relié en série avec des conducteurs 3. Les conducteurs aval 3b sont connectés en série avec les conducteurs 3. En cas de défaut électrique au niveau des charges reliées aux conducteurs 3b, l'appareil de protection 1 ouvre l'interrupteur 2 afin d'interrompre la circulation d'énergie entre les conducteurs 3a et les conducteurs 3b. La commande d'ouverture de l'interrupteur 2 est activée par l'actionneur 4.

L'actionneur 4 est un organe électromécanique qui reçoit une énergie électrique de commande sur des liaisons 11a et 11b pour transformer l'énergie électrique reçue en énergie mécanique utilisée pour l'activation de l'interrupteur 2. Le circuit de commande 5 est connecté aux conducteurs 3 et agencé pour prélever de l'énergie électrique du réseau pour alimenter l'actionneur 4 quand il faut actionner l'interrupteur 2. L'actionneur 4 est commandé préférentiellement par une application d'une tension prélevée sur les conducteurs 3 du réseau électrique. La figure 1 représente, selon un mode de réalisation préférentiel, un appareil de protection destiné à une utilisation sur un réseau électrique monophasé comportant deux conducteurs de courant 3a. Une tension électrique U est présente entre les conducteurs 3a, 3, 3b, par exemple 240 Volts, en fonctionnement nominal. Lorsqu'un défaut électrique, tel qu'un court-circuit, est présent au niveau des charges reliées aux conducteurs 3b, la tension U peut baisser significativement, par exemple jusque 50 Volts et cependant l'actionneur, prévu pour fonctionner sous une tension nominale Un égale à 240 Volts par exemple, doit toujours être en mesure d'activer l'interrupteur 2. Par ailleurs, il existe des installations électriques pour lesquelles l'appareil de protection peut être alimenté par l'aval c'est-à-dire que les conducteurs de courant 3b sont reliés au réseau électrique fournisseur d'énergie et les conducteurs 3a sont reliés aux charges. La tension U est donc présente en permanence entre les deux conducteurs 3b, même lorsque l'interrupteur 2 est ouvert.

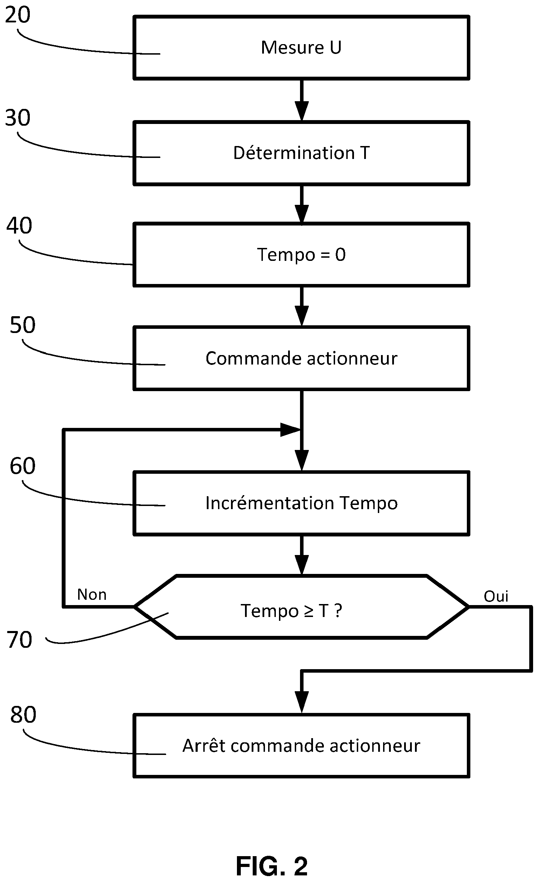

La figure 2 est un organigramme du procédé de commande de l'actionneur selon un premier mode de réalisation de l'invention. Le procédé comporte une étape 20 de mesure de la tension U entre les conducteurs 3 au moyen d'un circuit de mesure 6. Ensuite, le procédé comporte une étape 30 de détermination d'une durée T pendant laquelle une commande doit être appliquée à l'actionneur pour activer l'ouverture de l'interrupteur 2. Selon l'invention, la durée T est fonction de la tension U présente à l'instant de la commande. Un point de référence est une durée nominale de commande Tn, prédéfinie par construction de l'actionneur, pour une tension nominale Un de commande de l'actionneur. Par exemple, Tn est égale à 40 ms pour une tension nominale Un égale à 240 Volt. Selon l'invention, la relation entre la durée T et la tension U est telle que pour une tension U inférieure à la tension nominale Un, la durée de commande T est supérieure à la durée nominale Tn. Ainsi, l'actionneur dispose d'une énergie sensiblement constante, adaptée en fonction du niveau de la tension U, pour actionner l'interrupteur 2. Ensuite, au cours de l'étape 40, un compteur de temps Tempo est initialisé à zéro, puis, au cours de l'étape 50, l'actionneur 4 est commandé. Ensuite, à l'étape 60, le compteur de temps Tempo est incrémenté à chaque unité de temps écoulé. Préférentiellement, une unité de temps est égale à une milliseconde. Le procédé passe ensuite à une étape 70 pour comparer le temps écoulé Tempo à la durée de commande T. Tant que le temps écoulé Tempo est inférieur au temps de commande T, la commande est maintenue. Quand le temps écoulé Tempo est égal ou supérieur à T, le procédé passe à l'étape 80 comportant un arrêt de la commande de l'actionneur 4. Ce procédé présente l'avantage de commander l'alimentation de l'actionneur 4 pendant le temps nécessaire à l'actionnement de l'interrupteur 2 puis arrête la commande de l'actionneur pour limiter l'échauffement dudit l'actionneur. Ce mode de fonctionnement est identique que l'appareil de protection soit alimenté par l'amont ou par l'aval.

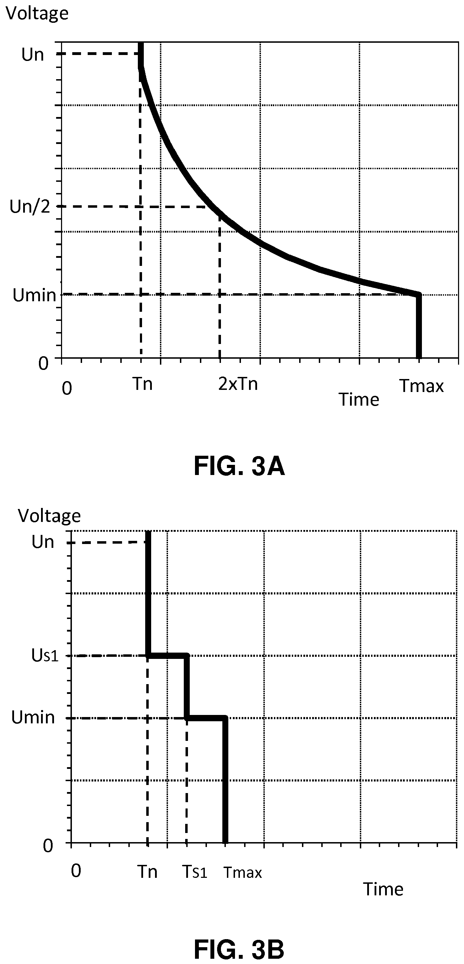

Un premier mode de détermination de la durée de commande T en fonction de la tension U est illustré sous la forme d'une représentation graphique en figure 3A. Dans ce premier mode de réalisation, la durée de commande T est calculée au moyen d'une équation :

$$durée\ de\ commande\ T = durée\ de\ commande\ nominale\ Tn \times \frac{tension\ nominale\ Un}{tension\ mesurée\ U}$$

Pour une tension U égale à la tension nominale Un, la durée de commande T est égale à la durée nominale Tn et pour toute valeur de tension U mesurée inférieure à la tension nominale Un, la durée T de commande de l'actionneur est supérieure à la durée de commande nominale Tn. Par exemple, pour une tension U égale à la moitié de la tension nominale Un, la durée de commande T est égale au double de la durée nominale Tn.

La quantité Tn x Un est égale à une constante Kn représentant l'énergie nécessaire pour activer l'actionneur. L'équation peut donc être représentée sous une forme équivalente :

$$durée\ de\ commande\ T = \frac{Kn}{tension\ mesurée\ U}$$

L'utilisation de l'équation de calcul est facile à mettre en oeuvre mais, pour une tension U faible, la durée T est très longue. Par exemple, pour U = Un /10, la durée T = 10 x Tn. Une commande de l'actionneur pendant une durée longue peut provoquer un échauffement excessif de l'actionneur. Pour éviter un tel effet, si la tension U, mesurée à l'étape 20, est inférieure à une tension minimale Umin, alors l'actionneur est commandé pendant une durée maximale Tmax prédéterminée après laquelle la commande de l'actionneur est arrêtée.

A l'inverse, pour une tension U supérieure à Un, la durée T est égale à Tn.

Il est possible d'introduire des variantes dans l'équation de calcul : par exemple ajouter une constante à la tension nominale Un ou une constante au temps Tn ou encore utiliser un coefficient multiplicateur de la tension nominale Un ou de la constante au temps Tn. L'utilisation de constantes ou coefficients multiplicateurs modifie la concavité de la courbe représentée sur la figure 3A et les valeurs aux limites. Cette utilisation est destinée à une adaptation de la durée de commande T à des contraintes de construction de l'actionneur 4. De manière plus générale, la constante Kn peut être définie à partir de la tension nominale Un et/ou de tout autre paramètre électrique propre à l'actionneur tel que, par exemple, le courant nominal circulant dans l'actionneur ou la valeur de l'inductance de l'actionneur.

Un deuxième mode de détermination de la durée de commande T en fonction de la tension U est illustré en figure 3B. Dans ce mode de réalisation, la durée de commande T est constante à l'intérieur de plages prédéfinies de tension U. Ainsi, pour une tension U inférieure à la tension nominale Un et supérieure ou égale à un premier seuil de tension Us1, Us1 étant inférieur à Un, la durée de commande T associée est égale à Tn. Pour une tension U inférieure au premier seuil de tension Us1 et supérieure ou égale à un deuxième seuil de tension Umin, Umin étant inférieur à Us1, la durée de commande T est égale à une durée prédéfinie Ts1, Ts1 étant supérieur à Tn. Pour une tension U inférieure au deuxième seuil de tension Umin, la durée de commande T est égale à Tmax, Tmax étant supérieur à Ts1.

Par la suite, nous emploierons l'expression : « la durée de commande T est associée à une plage de tension U » pour indiquer une association unique entre une plage de tension et une durée de commande. Ainsi dans l'exemple illustré en figure 3B :

- la durée de commande Tn est associée à la plage de tension Un-Us1,
- la durée de commande Ts1 est associée à la plage de tension Us1-Umin, et
- la durée de commande Tmax est associée à la plage de tension Umin - 0 Volt.

De manière plus générale, il est possible d'associer une durée de commande T à toute plage de tension donnée en respectant plusieurs règles :

- une durée de commande associée à une plage donnée est supérieure à la durée de commande associée à la plage de tension immédiatement supérieure,
- les plages de tension sont consécutives, c'est-à-dire que la limite inférieure d'une plage de tension donnée est égale à la limite supérieure de la plage de tension immédiatement inférieure,
- la tension nominale Un fait partie d'une plage de tension U dite « plage nominale » contenant les tensions les plus élevées, et
- la durée de commande nominale Tn est associée à la plage de tension nominale,et
- la durée de commande T de l'actionneur ne dépasse pas la durée maximale Tmax.

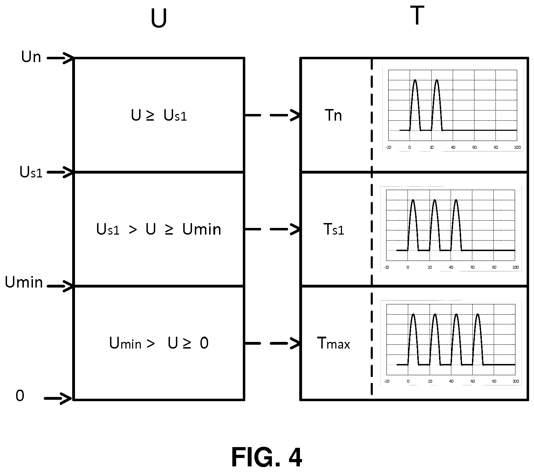

Selon l'exemple illustré en figure 3B, la plage de tension nominale est la plage Un-Us1. Il est possible de définir autant de plages que nécessaire, par exemple pour s'adapter aux caractéristique de fonctionnement de l'actionneur. Une définition d'au moins deux plages de tension est évidemment nécessaire. La tension nominale Un peut constituer une borne supérieure de la plage nominale. Cependant la tension d'alimentation des équipements pouvant évoluer au-dessus de la valeur nominale donnée, par exemple +10%, la plage dite nominale pourra être Un+10% - Us1. Plus généralement, la durée de commande T est égale à la durée de commande nominale Tn pour une tension U supérieure à Un. Dans ce mode de réalisation, pour chaque plage de tension prédéfinie, la durée de commande T est supérieure ou égale à la durée de commande nominale Tn pour toute valeur de tension U mesurée inférieure à la tension nominale Un.
Afin de faciliter la mise en oeuvre de ce mode de réalisation, une table d'association tension-durée est construite. Un exemple de table d'association tension-durée est représenté sur la figure 4. Sur une colonne sont identifiées les plages de tension d'alimentation U avec en regard, dans une seconde colonne, la durée de commande T associée à chaque plage. Une telle table d'association peut facilement être implantée dans une mémoire d'un circuit de traitement.
En variante, pour une alimentation à partir d'une ligne électrique fournissant une tension alternative à fréquence F, la durée de commande peut être définie en nombre d'alternance dudit réseau, une alternance étant définie comme étant une demi-période d'un phénomène alternatif. Pour une alimentation mono-alternance de l'actionneur à partir d'un réseau de fréquence F=50 Hz, soit une période de 20 ms, une durée Tn égale à 40 ms correspond à deux alternances.
Dans un mode de réalisation préférentiel, pour une tension nominale Un de la ligne électrique 3 égale à 240 Volt, la durée T de commande d'alimentation de l'actionneur 4 est égale à :

- une durée Tn égale à 40 ms soit deux alternances d'une alimentation mono-alternance, quand la tension U mesurée est supérieure ou égale à 150 Volt,
- une durée Ts1 égale à 60 ms soit trois alternances d'une alimentation mono-alternance, quand la tension mesurée U est inférieure à 150 Volt et supérieure ou égale à 100 Volt, et
- une durée Tmax égale à 80 ms soit quatre alternances d'une alimentation mono-alternance quand la tension mesurée U est inférieure à 100 Volt.

Une durée de commande T de l'actionneur, inférieure ou égale à 40 ms quand la tension U de la ligne électrique est égale à une valeur de tension nominale Un fixée à 240 Volt permet de répondre aux exigences des normes IEC/EN 61008 et IEC/EN 61009 concernant le temps de réponse pour la protection des personnes.
La table d'association représentée en figure 4 illustre également la correspondance entre chaque plage de tension d'alimentation U et la durée de commande T associée, exprimée en nombre d'alternances d'une alimentation mono-alternance. Le procédé décrit est indépendant de la fréquence du réseau électrique quand la durée de commande Tn est exprimée en nombre d'alternances d'une alimentation mono-alternance. Ainsi pour un réseau de fréquence 60 Hz, une durée Tn correspondant à deux alternances d'une alimentation mono-alternance sera égale à 33,3 ms.

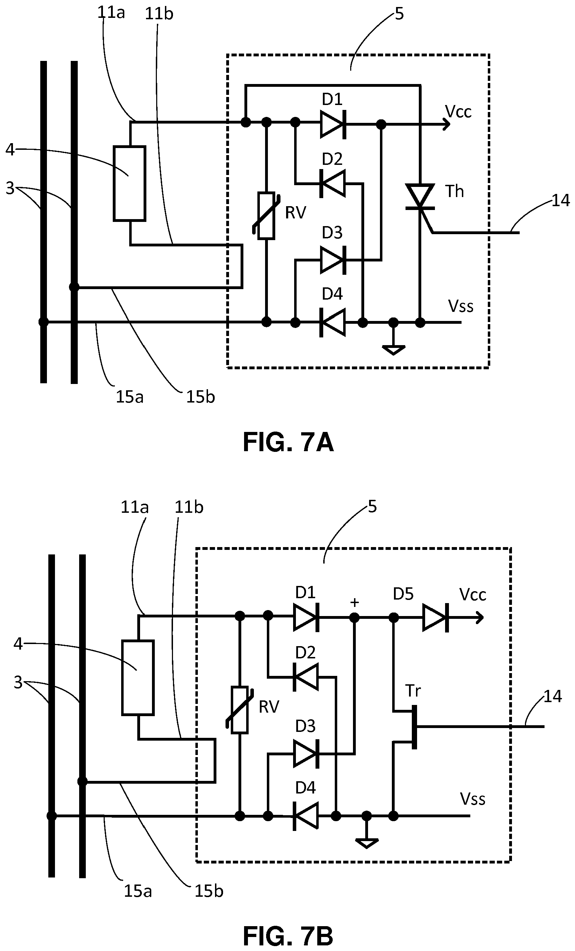

Préférentiellement, la durée de commande de l'actionneur correspond à un nombre entier d'alternances de la tension alternative. Cette correspondance astucieuse permet de simplifier la mise en oeuvre de l'algorithme de commande d'un actionneur en le rendant indépendant d'éventuelles variations de la fréquence du réseau électrique. D'autre part le choix d'un nombre entier d'alternance favorise la mise en oeuvre en simplifiant le comptage des alternances et favorise également la réalisation pratique de l'alimentation de l'actionneur ainsi que décrit ultérieurement et représenté en figures 7A et 7B.

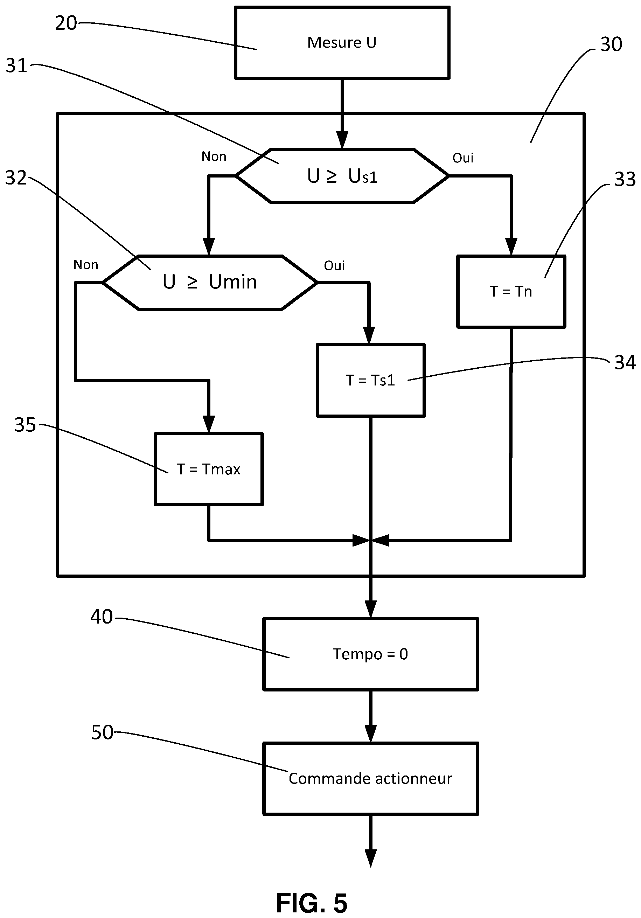

La figure 5 représente un organigramme détaillé de détermination de la durée de commande de l'actionneur au moyen d'une table d'association tension-durée. La mesure de la tension U étant effectuée au cours de l'étape 20, la tension U est comparée au premier seuil de tension Us1 au cours de l'étape 31. Si la tension U est supérieure ou égale au premier seuil de tension Us1 alors la durée de commande T est fixée à la durée nominale Tn au cours de l'étape 33 et le procédé se poursuit par l'étape 40 au cours de laquelle le compteur de temps Tempo est initialisé à zéro. Si la tension U est inférieure au premier seuil Us1, la tension U est comparée au deuxième seuil de tension Umin au cours de l'étape 32. Si la tension U est supérieure au deuxième seuil de tension Umin alors la durée de commande T est égale à la durée prédéfinie Ts1 au cours de l'étape 34 et le procédé se poursuit par l'étape 40. Si la tension U est inférieure au deuxième seuil de tension Umin, alors la durée de commande T est définie égale à Tmax au cours de l'étape 35. L'étape 30 est constituée des étapes 31, 32, 33, 34 et 35. Cette étape 30 correspond au procédé de détermination de la durée de commande de l'actionneur au moyen d'une table d'association tension-durée selon le deuxième mode de détermination. Le procédé de commande se poursuit ensuite par l'étape 40 au cours de laquelle le compteur de temps Tempo est initialisé à zéro, puis par l'étape 50 au cours de laquelle l'actionneur 4 est commandé. Le procédé de commande se termine par les étapes 70 et 80 telles que représentées sur la figure 2.

Le procédé ainsi décrit est applicable à autant de plages de tension que nécessaire : pour n plages de tension, n-1 comparaisons sont nécessaires. Dans le cas d'un grand nombre de plages de tension, il est possible de réduire le nombre de comparaisons en procédant par dichotomie.

Le procédé est tel que, quand la tension U est supérieure à Un, la durée de commande de l'actionneur T reste égale à la durée nominale Tn.

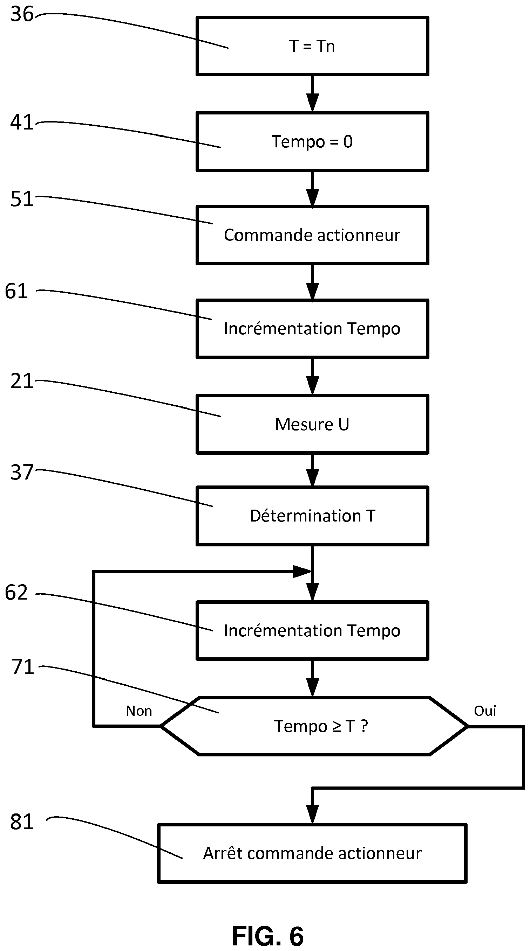

La figure 6 représente un organigramme du procédé de commande de l'actionneur selon un deuxième mode de réalisation permettant de réduire le temps de réponse lors de la commande de l'actionneur. Le procédé commence à l'étape 36 au cours de laquelle la durée de commande T est fixée à la durée nominale Tn. Ensuite, à l'étape 41, le compteur de temps Tempo est initialisé à zéro puis le procédé passe à l'étape 51 correspondant à la commande de l'actionneur 4. A l'étape 61, le compteur de temps Tempo est démarré et commence à compter le temps écoulé. Le procédé passe ensuite à l'étape 21 de mesure de la tension U puis à l'étape 37 de détermination de la durée T selon l'un ou l'autre des deux modes de détermination. Ensuite, au cours des étapes 62 et 71, le procédé incrémente le compteur de temps Tempo, après chaque unité de temps écoulée, jusqu'à ce que le compteur de temps Tempo soit égal ou supérieur au temps T. Ensuite, la commande de l'actionneur 4 est arrêtée à l'étape 81. Dans ce deuxième mode de réalisation, l'étape 36 est équivalente à l'étape 33, l'étape 41 est équivalente à l'étape 40, l'étape 51 est équivalente à l'étape 50, l'étape 21 est équivalente à l'étape 20, l'étape 37 est équivalente à l'étape 30, l'étape 71 est équivalente à l'étape 70 et l'étape 81 est équivalente à l'étape 80. Cette variante du procédé permet de lancer immédiatement la commande d'alimentation de l'actionneur à l'étape 51, avant d'effectuer la mesure de la tension U à l'étape 21. La durée T est ajustée par la suite, si nécessaire, à l'étape 37. Le procédé illustré en figure 2 est plus simple mais l'actionneur n'est pas commandé tant que la mesure de la tension U n'est pas effectuée au cours de l'étape 20 ce qui retarde d'autant de temps l'ouverture des contacts 2. Le procédé de la figure 2 est donc réservé à un appareil capable d'effectuer la mesure de la tension U dans un temps négligeable par rapport au temps de réponse nominal Tn. Une autre possibilité de compenser le temps de mesure de la tension à l'étape 20 est de retrancher à la durée T déterminée à l'étape 30 le temps nécessaire à la mesure.

Le procédé de l'invention est destiné préférentiellement à la commande d'un actionneur 4 destiné à activer l'ouverture d'un interrupteur de courant 2 dans un appareil de protection électrique 1 comportant :

- un interrupteur de courant 2 pour établir ou pour interrompre la circulation d'un courant électrique dans une ligne électrique 3,
- un actionneur 4 pour activer l'ouverture de l'interrupteur de courant 2, et
- un circuit de détection de défaut 8 relié à un capteur 9 pour fournir un signal de défaut à un circuit de traitement 7 quand un défaut électrique est présent sur une ligne électrique 3, 3a ou 3b. Le capteur 9 est un capteur d'un ou plusieurs paramètres électriques ou électromécaniques tels que courant, tension, fréquence, états, signal d'anomalie de fonctionnement, la liste étant non limitative. Préférentiellement, le capteur 9 est un capteur de courant différentiel.

L'appareil de protection électrique de l'invention comporte un dispositif d'actionnement 10 comprenant :

- un circuit de mesure 6 relié à la ligne électrique 3 pour fournir une mesure de la tension U entre les conducteurs de la ligne électrique 3,

- un circuit de commande 5 de l'actionneur 4 agencé pour commander une alimentation de l'actionneur 4 en prélevant l'énergie électrique sur les conducteurs de la ligne électrique 3,
- un circuit de traitement 7 relié :

  - au circuit de mesure 6 par une liaison 13,
  - au circuit de détection de défaut 8 par une liaison 12, et
  - au circuit de commande de l'actionneur 5 par une liaison 14.

Le circuit de traitement 7 est agencé pour :

- recevoir le signal de défaut par la liaison 12,
- recevoir la mesure de la tension U de la ligne électrique par la liaison 13, et
- exécuter le procédé de commande de l'actionneur quand le circuit de traitement 7 reçoit le signal de défaut.

Le circuit de traitement comprend préférentiellement un microcontrôleur pour exécuter les étapes du procédé et une mémoire pour contenir la table d'association tension-durée et les valeurs des constantes $U_n$ et $T_n$.

La figure 7A représente le schéma du circuit de commande 5 de l'actionneur selon un mode de réalisation préférentiel. L'énergie électrique sous la tension U est prélevée sur les conducteurs 3 au moyen de liaisons 15a et 15b. La liaison 15a est connectée à l'actionneur 4 via une liaison 11b, la liaison 15b est connectée à deux diodes D3 et D4 formant avec D1 et D2 un pont de diode destiné à fournir une tension redressée double alternance pour l'alimentation des circuits entre les points Vcc et Vss. Un thyristor Th est connecté entre la liaison 11a et le potentiel de référence Vss. La commande de mise en conduction du thyristor Th est réalisée par la liaison 14 reliée au circuit de traitement 7. Ainsi lorsque le circuit de commande envoie un ordre de commande d'alimentation de l'actionneur 4, le thyristor Th est mis en conduction et la tension présente entre les conducteurs 3 s'établit aux bornes de l'actionneur 4 via les liaisons 15b, le thyristor Th, la diode D4 et la liaison 15a. Une alternance positive circule dans l'actionneur 4. Au passage de la tension U à zéro, le thyristor se bloque et l'alternance négative fournit une alimentation Vcc mais ne permet pas une alimentation de l'actionneur. Le thyristor n'autorise qu'une alimentation mono-alternance de l'actionneur. Le thyristor Th peut être mis en conduction à n'importe quel moment mais, préférentiellement, le circuit de commande envoie l'ordre de mise en conduction du thyristor Th quand la tension U passe par zéro, avant l'arrivée d'une alternance positive. Ainsi, l'actionneur est alimenté par une alternance complète. La commande d'alimentation se trouve synchronisée avec le réseau électrique fournissant l'alimentation.

Le thyristor Th peut être remplacé par un triac, un transistor ou tout autre dispositif interrupteur commandable.

La figure 7B représente un schéma d'une variante de circuit de commande de l'actionneur. L'interrupteur commandable par la liaison 14 est un transistor Tr. Le transistor Tr est connecté entre les sorties du pont de diode formé par D1, D2, D3 et D4, ou encore entre la cathode de la diode D1 et le potentiel de référence Vss. En recevant une commande d'alimentation de l'actionneur 4 via la liaison 14, le transistor Tr devient conducteur et court-circuite les sorties du pont de diode. La tension présente entre les conducteurs 3 s'établit aux bornes de l'actionneur 4 via la liaison 15b, le transistor Tr, la liaison 15a et, selon la polarité de la tension U, via les diodes D1 et D4 ou D3 et D2. L'actionneur est alimenté en tension redressée double alternance. Le schéma de la figure 7B fournit à l'actionneur 4 une tension efficace plus élevée que dans le cas du schéma de la figure 7A. Il nécessite cependant une diode D5 supplémentaire pour conserver la tension Vcc quand le transistor Tr est conducteur.

Quand le thyristor Th ou le transistor Tr ne sont pas commandés, l'alimentation pour les circuits de mesure 6, de traitement 7 ou de détection 8, délivrée entre les points Vcc et Vss, s'effectue au travers de l'actionneur 4. Le courant est faible parce que les circuits consomment peu et l'actionneur ne dispose pas d'assez d'énergie pour être activé. En revanche, l'impédance de l'actionneur joue le rôle de filtre contre les perturbations électromagnétiques hautes fréquences ce qui permet une réduction de taille et de puissance des composants de protection contre ce type de perturbation. Selon un mode de réalisation préférentiel de l'invention, une varistance RV est reliée d'une part à la liaison 11a et d'autre part à la liaison 15a pour écrêter toute surtension sensiblement supérieure à $U_n$ présente entre les conducteurs 3.

Le procédé de l'invention ainsi décrit permet une commande d'alimentation de l'actionneur qui s'adapte à une baisse importante de la tension d'alimentation U, en adaptant la durée de commande T de manière à fournir l'énergie nécessaire pour activer l'ouverture de l'interrupteur 2 dans le temps le plus court possible. La durée de la commande est cependant limitée afin de réduire l'échauffement de l'actionneur 4 et permettre l'implantation de l'actionneur et du dispositif d'actionnement 10 dans un appareil soumis à une température ambiante élevée et/ou intégré dans un environnement ou la densité d'appareillage est importante. Le procédé peut être mis en oeuvre avec des moyens simples et économiques adaptés à une utilisation dans un appareil de protection produit en grande série. L'utilisation du procédé de l'invention permet également une réduction du nombre de variantes industrielles d'actionneurs puisqu'il rend possible l'utilisation d'un actionneur sur une large plage de tension. L'influence d'une variation de la fréquence du réseau électrique est atténuée ce qui apporte un supplément d'adaptabilité de fonctionnement face aux perturbations dudit réseau.

Plus généralement, le procédé de l'invention peut être utilisé dans un appareil de protection pour réseau électrique monophasé ou triphasé, en basse, moyenne ou haute tension. Le procédé peut également être utilisé dans un appareil fonctionnant sur un réseau de tension continue, la durée de commande ne pouvant évidemment pas être exprimée en nombre d'alternances dans ce cas.

**Revendications**

1. Procédé de commande d'un actionneur (4) destiné à activer l'ouverture d'un interrupteur de courant (2) connecté à une ligne électrique, le procédé comportant:

   - une mesure de tension (U) de la ligne électrique,

   le procédé étant **caractérisé en ce qu'**il comporte:

   - une détermination d'une durée de commande (T) de l'actionneur (4) en fonction de la tension mesurée (U) et d'une durée de commande nominale (Tn) prédéfinie, la durée de commande (T) étant supérieure ou égale à la durée de commande nominale (Tn) quand la tension mesurée (U) est inférieure à une tension nominale prédéfinie (Un), et
   - une commande de l'actionneur pendant la durée (T) de commande déterminée.

2. Procédé de commande d'un actionneur (4) selon la revendication 1 **caractérisé en ce que**, si la tension mesurée (U) est supérieure à une tension minimale (Umin) prédéfinie et inférieure ou égale à la tension nominale (Un), la détermination de la durée de commande (T) de l'actionneur (4) comporte un calcul selon l'équation :

$$dur\acute{e}e\ de\ commande\ (T)$$
$$= dur\acute{e}e\ de\ commande\ nominale\,(Tn) \times \frac{tension\ nominale\ (Un)}{tension\ mesur\acute{e}e\ (U)}$$

3. Procédé de commande d'un actionneur (4) selon la revendication 1 **caractérisé en ce que** la détermination de la durée de commande (T) de l'actionneur utilise une table d'association tension-durée prédéfinie formée de, au moins, deux plages consécutives de tension parmi lesquelles une plage, dite nominale, contient la tension nominale (Un), chaque plage de tension étant associée à une durée prédéfinie de commande, ladite détermination de la durée de commande comportant :

   - une ou plusieurs étapes (31,32) de sélection d'une plage de tension dans laquelle est comprise la tension mesurée (U), et
   - une ou plusieurs étapes (33, 34, 35) de détermination de la durée de commande (T) de l'actionneur égale à la durée prédéfinie de commande (Tn, Ts1, Tmax) associée à la plage de tension sélectionnée.

4. Procédé de commande d'un actionneur selon la revendication 3 **caractérisé en ce que** la ligne électrique fournit une tension alternative et que la durée de commande (T) de l'actionneur correspond à un nombre entier d'alternances de la tension alternative.

5. Dispositif d'actionnement (10) **caractérisé en ce qu'**il comprend :

   - un circuit de mesure (6) relié à une ligne électrique (3) pour fournir une mesure d'une tension (U) de la ligne électrique (3),
   - un circuit de commande (5) d'un actionneur (4) agencé pour commander une alimentation de l'actionneur (4) par le réseau électrique,
   - un circuit de traitement (7) relié au circuit de mesure (6), à un circuit de détection de défaut (8) et au circuit de commande (5) de l'actionneur, ledit circuit de traitement étant agencé pour :

      - recevoir un signal de défaut émis par le circuit de détection de défaut (8),
      - recevoir la mesure (U) de la tension de la ligne électrique (3), et
      - exécuter le procédé de commande de l'actionneur selon l'une quelconque des revendications 1 à 4 quand ledit circuit de traitement (7) reçoit le signal de défaut.

6. Dispositif d'actionnement (10) selon la revendication 5 **caractérisé en ce que** la durée de commande (T) de l'actionneur est inférieure ou égale à 40 ms quand la tension (U) de la ligne électrique est égale à une valeur de tension nominale (Un) prédéfinie.

7. Dispositif d'actionnement (10) selon l'une des revendications 5 ou 6 **caractérisé en ce que** la durée de commande (T) de l'actionneur est limitée à une durée maximale (Tmax) prédéfinie.

8. Dispositif d'actionnement (10) selon l'une quelconque des revendications 5 à 7 **caractérisé en ce que** le circuit de commande (5) de l'actionneur (4) fournit une tension alternative redressée à l'actionneur (4).

9. Dispositif d'actionnement (10) selon la revendication 8 **caractérisé en ce que** la commande (5) de l'actionneur (4) est initialisée à un passage à zéro de la tension (U) de la ligne électrique.

10. Dispositif d'actionnement (10) selon l'une quelconque des revendications 8 ou 9 **caractérisé en ce que** le circuit de commande (5) de l'actionneur (4) comprend un thyristor (Th).

11. Dispositif d'actionnement (10) selon la revendication 10 **caractérisé en ce que**, pour une tension nominale (Un) de la ligne électrique égale à 240 Volt, la commande (5) de l'actionneur (4) commande l'alimentation de l'actionneur (4) pendant :

   - deux alternances quand la tension mesurée (U) est supérieure ou égale à 150 Volt,
   - trois alternances quand la tension mesurée (U) est inférieure à 150 Volt et supérieure ou égale à 100 Volt, et
   - quatre alternances quand la tension mesurée (U) est inférieure à 100 Volt.

12. Appareil de protection électrique (1) connecté à un réseau électrique comportant :

   - un interrupteur de courant (2) pour établir ou pour interrompre la circulation d'un courant électrique dans une ligne électrique (3),
   - un actionneur (4) pour activer l'ouverture de l'interrupteur de courant (2), et
   - un circuit de détection de défaut (8) sur le réseau électrique pour fournir un signal de défaut,

   **caractérisé en ce que** ledit appareil de protection électrique (1) comporte un dispositif d'actionnement (10) selon l'une quelconque des revendications 5 à 11.

**Patentansprüche**

1. Verfahren zur Steuerung eines Stellglieds (4), das dazu bestimmt ist, das Öffnen eines Stromaschalters (2), der an eine elektrische Leitung angeschlossen ist, zu aktivieren, wobei das Verfahren **dadurch gekennzeichnet ist, dass** es umfasst:

   - eine Messung der Spannung (U) der elektrischen Leitung,
   - eine Bestimmung einer Steuerungsdauer (T) des Stellglieds (4) in Abhängigkeit von der gemessenen Spannung (U) und einer vordefinierten Nominalsteuerungsdauer (Tn), wobei die Steuerungsdauer (T) größer oder gleich der Nominalsteuerungsdauer (Tn) ist, wenn die gemessene Spannung (U) kleiner als eine vordefinierte Nominalspannung (Un) ist, und
   - eine Steuerung des Stellglieds während der bestimmten Steuerungsdauer (T).

2. Verfahren zur Steuerung eines Stellglieds (4) nach Anspruch 1, **dadurch gekennzeichnet, dass**, wenn die gemessene Spannung (U) größer als die vordefinierte Mindestspannung (Umin) und kleiner oder gleich der Nominalspannung (Un) ist, die Bestimmung der Steuerungsdauer (T) des Stellglieds (4) eine Berechnung nach folgender Gleichung umfasst:

$$Steuerungsdauer\ (T)$$
$$= Nominalsteuerungsdauer\ (Tn) \times \frac{Nominalspannung\ (Un)}{gemessene\ Spannung\ (U)}$$

3. Verfahren zur Steuerung eines Stellglieds (4) nach Anspruch 1, **dadurch gekennzeichnet, dass** die Bestimmung der Steuerungsdauer (T) des Stellglieds eine vordefinierte Zuordnungstabelle Spannung-Dauer verwendet, die von mindestens zwei aufeinanderfolgenden Spannungsbereichen gebildet ist, darunter einem so genannten Nominalbereich, der die Nominalspannung (Un) enthält, wobei jeder Spannungsbereich einer vordefinierten Steuerungsdauer zugeordnet ist, wobei die Bestimmung der Steuerungsdauer umfasst:

    - einen oder mehrere Schritte (31, 32) der Auswahl eines Spannungsbereichs, in dem die gemessene Spannung (U) enthalten ist, und
    - einen oder mehrere Schritte (33, 34, 35) der Bestimmung der Steuerungsdauer (T) des Stellglieds gleich der vordefinierten Steuerungsdauer (Tn, Ts1, Tmax), die dem ausgewählten Spannungsbereich zugeordnet ist.

4. Verfahren zur Steuerung eines Stellglieds nach Anspruch 3, **dadurch gekennzeichnet, dass** die elektrische Leitung eine Wechselspannung liefert, und dass die Steuerungsdauer (T) des Stellglieds einer ganzen Zahl von Wechselfolgen der Wechselspannung entspricht.

5. Betätigungsvorrichtung (10), **dadurch gekennzeichnet, dass** sie umfasst:

    - eine Messschaltung (6), die mit der elektrischen Leitung (3) verbunden ist, um eine Messung einer Spannung (U) der elektrischen Leitung (3) zu liefern,
    - eine Steuerschaltung (5) eines Stellglieds (4), die dazu vorgesehen ist, eine Versorgung des Stellglieds (4) durch das elektrische Netz zu steuern,
    - eine Bearbeitungsschaltung (7), die mit der Messschaltung (6), einer Fehlererkennungsschaltung (8) und der Steuerschaltung (5) des Stellglieds verbunden ist, wobei die Bearbeitungsschaltung dazu vorgesehen ist, um:

        - ein Fehlersignal zu empfangen, das von der Fehlererkennungsschaltung (8) gesandt wird,
        - die Messung (U) der Spannung der elektrischen Leitung (3) zu empfangen, und
        - das Verfahren zur Steuerung des Stellglieds nach einem der Ansprüche 1 bis 4 auszuführen, wenn die Bearbeitungsschaltung (7) das Fehlersignal empfängt.

6. Betätigungsvorrichtung (10) nach Anspruch 5, **dadurch gekennzeichnet, dass** die Steuerungsdauer (T) des Stellglieds kleiner oder gleich 40 ms ist, wenn die Spannung (U) der elektrischen Leitung gleich einem vordefinierten Nominalspannungswert (Un) ist.

7. Betätigungsvorrichtung (10) nach einem der Ansprüche 5 oder 6, **dadurch gekennzeichnet, dass** die Steuerungsdauer (T) des Stellglieds auf eine vordefinierte Maximaldauer (Tmax) begrenzt ist.

8. Betätigungsvorrichtung (10) nach einem der Ansprüche 5 bis 7, **dadurch gekennzeichnet, dass** die Steuerschaltung (5) des Stellglieds (4) eine gleichgerichtete Wechselspannung an das Stellglied (4) liefert.

9. Betätigungsvorrichtung (10) nach Anspruch 8, **dadurch gekennzeichnet, dass** die Steuerung (5) des Stellglieds (4) bei einem Nulldurchgang der Spannung (U) der elektrischen Leitung initialisiert wird.

10. Betätigungsvorrichtung (10) nach einem der Ansprüche 8 oder 9, **dadurch gekennzeichnet, dass** die Steuerschaltung (5) des Stellglieds (4) einen Thyristor (Th) umfasst.

11. Betätigungsvorrichtung (10) nach Anspruch 10, **dadurch gekennzeichnet, dass** bei einer Nominalspannung (Un) der elektrischen Leitung gleich 240 Volt die Steuerung (5) des Stellglieds (4) die Versorgung des Stellglieds (4) steuert während:

    - zwei Wechselfolgen, wenn die gemessene Spannung (U) größer oder gleich 150 Volt ist,
    - drei Wechselfolgen, wenn die gemessene Spannung (U) kleiner als 150 Volt und größer oder gleich 100 Volt ist, und
    - vier Wechselfolgen, wenn die gemessene Spannung (U) kleiner als 100 Volt ist.

**12.** Elektrisches Schutzgerät (1), das an ein elektrisches Netz angeschlossen ist, umfassend:

- einen Stromschalter (2), um die Zirkulation eines elektrischen Stroms in einer elektrischen Leitung (3) herzustellen oder zu unterbrechen,
- ein Stellglied (4), um das Öffnen des Stromschalters (2) zu aktivieren, und
- eine Fehlerkennungsschaltung (8) auf dem elektrischen Netz, um ein Fehlersignal zu liefern,

**dadurch gekennzeichnet, dass** das elektrische Schutzgerät (1) eine Betätigungsvorrichtung (10) nach einem der Ansprüche 5 bis 11 umfasst.

**Claims**

**1.** Method for controlling an actuator (4) intended to activate the opening of a current switch (2) connected to a power line, the method being **characterized in that** it comprises:

- a measurement of voltage (U) of the power line,
- a determination of a control time (T) of the actuator (4) as a function of the voltage (U) measured and of a predefined nominal control time (Tn), the control time (T) being greater than or equal to the nominal control time (Tn) when the measured voltage (U) is less than a predefined nominal voltage (Un), and
- a control of the actuator for the determined control time (T).

**2.** Method for controlling an actuator (4) according to Claim 1, **characterized in that**, if the measured voltage (U) is greater than a predefined minimum voltage (Umin) and less than or equal to the nominal voltage (Un), the determination of the control time (T) of the actuator (4) comprises a calculation according to the equation:

$$control\ time\ (T)\ =\ nominal\ control\ time\ (Tn) \times \frac{nominal\ voltage\ (Un)}{measured\ voltage\ (U)}$$

**3.** Method for controlling an actuator (4) according to Claim 1, **characterized in that** the determination of the control time (T) of the actuator uses a predefined voltage-time mapping table formed at least by two consecutive voltage bands of which one band, called nominal band, contains the nominal voltage (Un), each voltage band being associated with a predefined control time, said determination of the control time comprising:

- one or more steps (31, 32) of selection of a voltage band in which the measured voltage (U) is included, and
- one or more steps (33, 34, 35) of determination of the control time (T) of the actuator equal to the predefined control time (Tn, Ts1, Tmax) associated with the selected voltage band.

**4.** Method for controlling an actuator according to Claim 3, **characterized in that** the power line supplies an alternating voltage and **in that** the control time (T) of the actuator corresponds to an integer number of alternations of the alternating voltage.

**5.** Actuation device (10), **characterized in that** it comprises:

- a measurement circuit (6) linked to a power line (3) to supply a measurement of a voltage (U) of the power line (3),
- a control circuit (5) of an actuator (4) arranged to control a power supply of the actuator (4) by the electrical network,
- a processing circuit (7) linked to the measurement circuit (6), to a fault detection circuit (8) and to the control circuit (5) of the actuator, said processing circuit being arranged to:

- receive a fault signal emitted by the fault detection circuit (8),
- receive the measurement (U) of the voltage of the power line (3), and
- execute the method for controlling the actuator according to any one of Claims 1 to 4 when said processing circuit (7) receives the fault signal.

**6.** Actuation device (10) according to Claim 5, **characterized in that** the control time (T) of the actuator is less than or equal to 40 ms when the voltage (U) of the power line is equal to a predefined nominal voltage value (Un).

7. Actuation device (10) according to one of Claims 5 and 6, **characterized in that** the control time (T) of the actuator is limited to a predefined maximum time (Tmax).

8. Actuation device (10) according to any one of Claims 5 to 7, **characterized in that** the control circuit (5) of the actuator (4) supplies a rectified alternating voltage to the actuator (4).

9. Actuation device (10) according to Claim 8, **characterized in that** the control (5) of the actuator (4) is initialized at a zero-crossing of the voltage (U) of the power line.

10. Actuation device (10) according to either one of Claims 8 and 9, **characterized in that** the control circuit (5) of the actuator (4) comprises a thyristor (Th).

11. Actuation device (10) according to Claim 10, **characterized in that**, for a nominal voltage (Un) of the power line equal to 240 volt, the control (5) of the actuator (4) controls the power supply of the actuator (4) for:

  - two alternations when the measured voltage (U) is greater than or equal to 150 volt,
  - three alternations when the measured voltage (U) is less than 150 volt and greater than or equal to 100 volt, and
  - four alternations when the measured voltage (U) is less than 100 volt.

12. Electrical protection unit (1) connected to an electrical network comprising:

  - a current switch (2) for establishing or interrupting the circulation of an electrical current in a power line (3),
  - an actuator (4) for activating the opening of the current switch (2), and
  - a fault detection circuit (8) on the electrical network for supplying a fault signal, **characterized in that** said electrical protection unit (1) comprises an actuation device (10) according to any one of Claims 5 to 11.

**FIG. 1**

20 → Mesure U

30 → Détermination T

40 → Tempo = 0

50 → Commande actionneur

60 → Incrémentation Tempo

Non ← 70 → Tempo ≥ T ? → Oui

80 → Arrêt commande actionneur

**FIG. 2**

FIG. 3A

FIG. 3B

U                 T

**FIG. 4**

20

30

31

32

33

Mesure U

U ≥ U$_{s1}$

Non        Oui

U ≥ Umin

Non        Oui

T = Tn

T = Ts1

34

35

T = Tmax

40

Tempo = 0

50

Commande actionneur

**FIG. 5**

36 ⟶ | T = Tn |

41 ⟶ | Tempo = 0 |

51 ⟶ | Commande actionneur |

61 ⟶ | Incrémentation Tempo |

21 ⟶ | Mesure U |

37 ⟶ | Détermination T |

62 ⟶ | Incrémentation Tempo |

71 ⟶ Non ⟵ | Tempo ≥ T ? | ⟶ Oui

81 ⟶ | Arrêt commande actionneur |

**FIG. 6**

**FIG. 7A**

**FIG. 7B**

**EP 3 389 076 B1**

## RÉFÉRENCES CITÉES DANS LA DESCRIPTION

**Documents brevets cités dans la description**

- WO 2015082629 A
- EP 2200050 A1
- FR 2604295 A1
- JP 4949927 B